# EUROPÄISCHE PATENTSCHRIFT

(11) **EP 1 176 482 B1**
(45) Veröffentlichungstag und Bekanntmachung des Hinweises auf die Patenterteilung: **22.12.2004**
(21) Anmeldenummer: 00810676.7
(22) Anmeldetag: 27.07.2000
(51) Int. Cl.: G05B 19/042, G05B 19/418

(54) **Verfahren und Computerprogramm zum Herstellen einer Regelung oder Steuerung**
Method and computer program for generating a regulation or control system
Méthode et logiciel pour la génération d'un système de régulation ou de commande

(43) Veröffentlichungstag der Anmeldung: 30.01.2002
(73) Patentinhaber: ABB RESEARCH LTD., 8050 Zürich (CH)
(72) Erfinder: Crevatin, Mario, 8409 Winterthur (CH)
(74) Vertreter: ABB Patent Attorneys

(56) Entgegenhaltungen:
- EP-A- 0 825 506
- WO-A-00/20939
- WO-A-97/12301
- WO-A-99/63409
- REZAYAT M: "Knowledge-based product development using XML and KCs" COMPUTER AIDED DESIGN,GB,ELSEVIER PUBLISHERS BV., BARKING, Bd. 32, Nr. 5-6, Mai 2000 (2000-05), Seiten 299-309, XP004194679 ISSN: 0010-4485
- "XML-BASED TEMPLATES FOR GENERATING ARTIFACTS FROM JAVA-BASED MODELS" RESEARCH DISCLOSURE,INDUSTRIAL OPPORTUNITIES LTD. HAVANT,GB, Nr. 416, Dezember 1998 (1998-12), Seiten 1678-1680, XP000834144 ISSN: 0374-4353

## Beschreibung

### Technisches Gebiet

Die Erfindung betrifft ein Verfahren sowie ein Computerprogramm zum Herstellen einer Regelung bzw. Steuerung gemäss Oberbegriff der unabhängigen Ansprüche.

### Stand der Technik

Es gibt verschiedene Entwicklungssysteme, mit denen Steuerungen oder Regelungen entworfen und simuliert werden können, wie z.B. Matlab® und Simulink® der Firma The MathWorks, Inc., Natick (USA).

Derartige Entwicklungssysteme erlauben es in der Regel, die entworfenen Steuerungen in C-Code umzuwandeln, so dass sie mit einem geeigneten Compiler kompiliert und als Prozess-Code auf einem Target-System in einer Regelung verwendet werden können.

Weiter bieten die Entwicklungssysteme die Möglichkeit, Parameter des auf dem Target-System laufenden Prozesses von einem Client-Computer aus zu prüfen und zu verändern. Hierzu müssen auf dem Client-Computer allerdings in der Regel teure und aufwendige Programme installiert werden.

### Darstellung der Erfindung

Es stellt sich deshalb die Aufgabe, ein Verfahren bzw. Software der eingangs genannten Art bereitzustellen, die es erlaubt, in einfacher Weise das obige Problem zu lösen.

Diese Aufgabe wird vom Verfahren bzw. vom Computerprogramm gemäss den unabhängigen Ansprüchen gelöst.

Das Entwicklungssystem erzeugt also eine Beschreibungs-Datei, die zumindest die Parameter des Steuer- bzw. Regelprozesses beschreibt. Insbesondere enthält die Beschreibungs-Datei die Namen der Parameter, vorzugweise auch den Typ bzw. die möglichen Werte der Parameter. Die Beschreibungs-Datei kann sodann von einem oder mehreren geeigneten Programmen dazu verwendet werden, einen Webserver oder Daten für einen Webserver zu generieren, der auf dem Target-System (d.h. der Steuerung bzw. Regelung) lauffähig ist und mindestens ein Prozesssteuerungs-Dokument in HTML-Format und/oder XML- beziehungsweise XML/XSL-Format bereitstellen kann, welches geeignete Ein- und/oder Ausgabeelemente für die Parameter enthält. Das Prozesssteuerungs-Dokument kann sodann von einem gängigen Browser von jedem Client-Computer abgerufen werden, so dass die Parameter des Prozesses in einfacher Weise ausgelesen bzw. geändert werden können.

Vorzugsweise gibt die Beschreibungs-Datei an, wie die Parameter im Prozesssteuerungs-Dokument darzustellen sind. Beispielsweise legt die Beschreibungsdatei die Reihenfolge oder die Orte fest, in bzw. an welchen die Parameter im Prozesssteuerungs-Dokument erscheinen sollen. Vorzugsweise ist die Beschreibungsdatei ebenfalls im HTML- oder im XML-Format, was die spätere Konversion vereinfacht.

Vorzugsweise wird zusätzlich zur Beschreibungsdatei eine Parameterlisten-Datei erzeugt, die eine Liste der Parameter enthält. In der Regel sind gängige Entwicklungssysteme hierzu in der Lage. Sodann wird die Parameterlisten-Datei dazu verwendet, die Namen der Parameter zu ermitteln, und mit der so gewonnenen Information kann die Beschreibungsdatei durchforscht bzw. geparst werden, um herauszufinden, wo die Parameter erscheinen. Die entsprechenden Orte werden sodann in geeigneter Weise mittels Steuerdaten, vorzugsweise mittels HTML-Tags, markiert. Dies ermöglicht es, aus den Dateien eines konventionellen Entwicklungssystem eine markierte Beschreibungsdatei zu erzeugen, die z.B. einem geeigneten Webserver-Generator zugeführt werden kann.

Vorzugsweise wird mit dem Entwicklungssystem eine Access-Interface-Datei erzeugt, die Deklarationen von Routinen enthält, über die auf die Parameter des laufenden Prozess-Codes zugegriffen werden kann. Diese Access-Interface-Datei wird bei der Erzeugung des Webservers zur Generierung von Code verwendet, mit welchem auf die Parameter zugegriffen werden kann. Dieses Vorgehen ist besonders für Entwicklungssysteme geeignet, die in der Lage sind, eine Access-Interface-Datei zu erzeugen.

Zum Erzeugen des Webservers wird vorzugsweise ein Webserver-Sourcecode erzeugt, der zusammen mit der Access-Interface-Datei kompiliert wird. Auch für den Prozess-Code wird vorzugsweise ein Prozess-Sourcecode erzeugt, der kompiliert und zum Webserver-Sourcecode gelinkt wird.

Im Gegensatz zu bekannten Lösungen werden im erfindungsgemässen Verfahren mittels der Beschreibungs-Datei und gegebenenfalls der Parameterlisten-Datei Steuerdaten zur Verfügung gestellt, die zur automatisierten Erzeugung des Webservers benutzt werden, was einer der Beiträge der vorliegenden Erfindung auf technischem Gebiet ist. Auch erlaubt die vorliegende Art der Bereitstellung von Informationen das Zusammenwirken von Programmen (Entwicklungssystem, Webserver-Generator), die in der Regel mit inkompatiblen Datenformaten arbeiten.

Ebenso neu ist die Verwendung einer Access-Interface-Datei als Steuerdaten für einen Stubfiller, um eine automatisierte Konversion oder Auffüllung der Stubs in Gluecode durchzuführen.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine schematische Darstellung der Komponenten bei der Entwicklung und beim Betrieb der Steuerung bzw. Regelung und
Fig. 2 ein Ablaufdiagramm mit den Programmkomponenten und Dateien bei einer möglichen Ausführung der Erfindung.

### Wege zur Ausführung der Erfindung

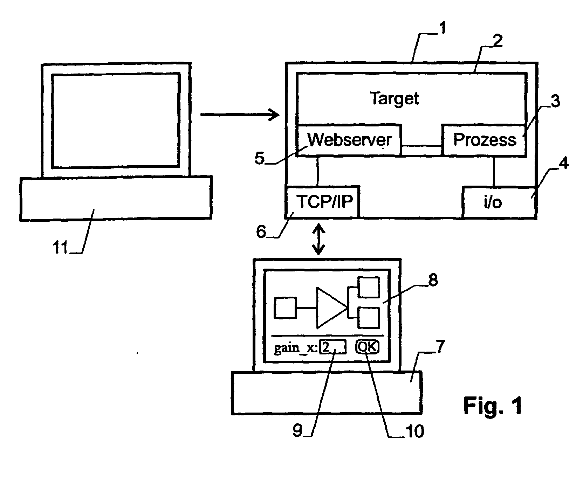

Die wichtigsten Komponenten zur Entwicklung und zum Betrieb einer Regelung bzw. Steuerung 1 sind in Fig. 1 dargestellt.

Die Steuerung 1 besitzt ein Target-System 2, welches in der Lage ist, einen Regel- bzw. Steuerprozess 3, welcher als Prozess-Code vorliegt, auszuführen. Um seine Regel- bzw. Steuerungsaufgaben wahrzunehmen, kann der Regel- bzw. Steuerprozess 3 auf digitale oder analoge Ein- und Ausgänge 4 der Regelung bzw. Steuerung 1 zugreifen.

Auf dem Target-System 2 läuft weiter ein Webserver 5, der mit einer TCP/IP-Schnittstelle 6 verbunden ist. Der Webserver 5 ist in der Lage, ein oder mehrere HTML- und/oder XML-Dokumente (Prozesssteuerungs-Dokument 8) zu erzeugen, die die Parameter des Prozesses 3 darstellen bzw. Eingabeelemente für deren Änderung enthalten. Der Webserver 5 ist über die TCP/IP Schnittstelle 6 über eine Leitung oder ein beliebiges Netzwerk verbunden, über welche oder welches das bzw. die HTML- und/oder XML-Dokumente abgerufen werden können.

Das Target-System 2 kann als "embedded system" in einer einfachsten Ausführung ein Mikroprozessorsystem ohne oder nur mit minimalem Betriebssystem sein, wobei in diesem Falle alle notwendige Software im Prozess 3 bzw. im Webserver 5 enthalten ist. Das Target-System 2 kann jedoch auch als Computer mit Betriebssystem ausgestaltet sein, welches dem Prozess 3 und dem Webserver 5 gewisse Dienste zur Verfügung stellt.

In Fig. 1 ist ein Client-Computer 7 dargestellt, mit welchem das Prozesssteuerungs-Dokument 8 über TCP/IP angefordert und in einem Web-Browser dargestellt werden kann. Im vorliegenden Fall enthält das Prozesssteuerungs-Dokument 8 z.B. eine graphische Darstellung der Steuerung bzw. Regelung in Form eines Blockdiagramms sowie eine Liste des bzw. der Parameter. In Fig. 1 ist z.B. ein Parameter mit dem Namen "gain_x" vorgesehen. Er wird, zusammen mit seinem momentanen Wert ("2") im Prozesssteuerungs-Dokument 8 dargestellt. Der Wert erscheint in einem Eingabefeld 9, kann editiert werden und durch Anklicken eines Knopfs 10 an den Webserver 5 geschickt werden.

Wenn der Webserver 5 das Prozesssteuerungs-Dokument 8 erzeugt, muss er zuerst den Wert des bzw. der darzustellenden Parameter vom Prozess 3 abfragen. Wenn der Benutzer am Client-Computer 7 den Wert des Parameters ändert, so muss der Webserver 5 den neuen Wert an den Prozess 3 weitergeben. Hierzu ist eine geeignete Verknüpfung zwischen Webserver 5 und Prozess 3 notwendig.

Im folgenden wird beschrieben, wie eine Steuerung 1 und insbesondere die Software für den Webserver 5 und den Prozess 3 in effizienter Weise entwickelt und hergestellt werden können.

Zu diesem Zweck wird auf einem Entwicklungs-Computer 11 (oder gegebenenfalls mehreren in geeigneter Weise verknüpften Computern) zuerst die Steuerung bzw. Regelung entwickelt. Sodann wird der Prozess-Code für den Prozess 3 und der Webserver-Sourcecode oder Webserver-Code für den Webserver 5 erzeugt. Diese Codes sind auf dem Target-System 2 lauffähig und werden auf jede herzustellende Steuerung bzw. Regelung transferiert.

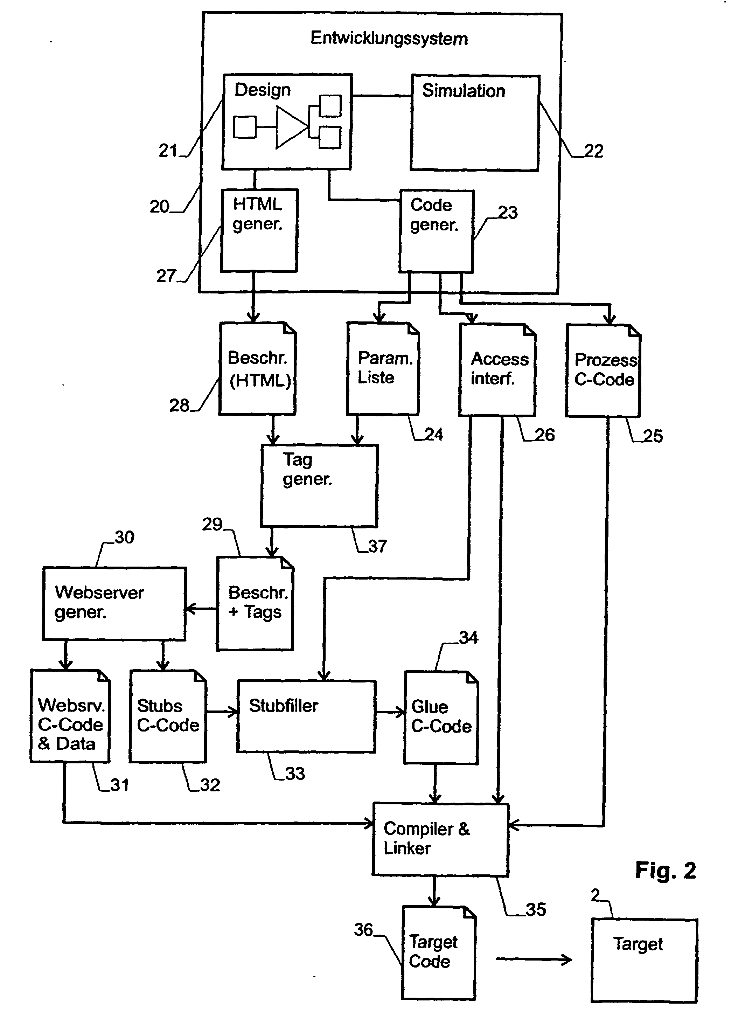

Eine bevorzugte Ausführung eines Ablaufdiagramms mit dem Programmkomponenten und Dateien auf dem Entwicklungs-Computer 11 ist in Fig. 2 dargestellt.

In einem ersten Schritt der Entwicklung wird ein Entwicklungssystem 20 verwendet, welches erlaubt, die Regelung bzw. Steuerung zu entwerfen und zu simulieren. Hierzu sind ein Design-Modul 21 und ein Simulations-Modul 22 vorhanden.

Das Design-Modul 21 erlaubt es z.B., die Steuerung bzw. Regelung als Diagramm darzustellen und die Eingänge und Ausgänge sowie die Verknüpfungen der einzelnen Komponenten zu definieren. Ausserdem können die Parameter definiert werden, die das Verhalten der Steuerung bzw. Regelung festlegen. Als Parameter kommen z.B. Verstärkungsfaktoren, Schalterstellungen, Zeitkonstanten, Entscheidungsvariabeln und andere Werte in Frage. Jeder Parameter besitzt zumindest einen Namen und einen Typ (z.B. "double", "float", "Boolean"). Gegebenenfalls kann er noch weitere Attribute besitzen, wie z.B. eine Angabe darüber, ob er nur gelesen oder auch geändert werden kann.

Im vorliegenden Beispiel wird z.B. eine Steuerung bzw. Regelung definiert, die einen Eingang, einen Verstärker sowie zwei Ausgänge besitzt. Als Parameter ist der als "gain_x" bezeichnete Verstärkungsfaktor des Verstärkers vorgesehen, der den Typ "double" besitzt.

Das Simulations-Modul erlaubt es, das Verhalten der so definierten Steuerung bzw. Regelung rechnerisch zu simulieren. Dies ermöglicht erste Tests der Steuerung bzw. Regelung.

Ist das Design soweit abgeschlossen, dass eine Steuerung bzw. Regelung 1 hergestellt werden kann, so muss der Code für den Prozess 3 erzeugt werden. Hierzu ist ein Code-Generator 23 vorgesehen. Dieser übernimmt die Design-Daten vom Design-Modul 21 und erzeugt drei Dateien bzw. Dateitypen: eine Parameterlisten-Datei 24, den Prozess-Sourcecode 25 und eine Access-Interface-Datei 26.

Die Parameterlisten-Datei 24 enthält eine Liste der Parameter. Insbesondere nennt sie für jeden Parameter den Namen und Typ. Im vorliegenden Beispiel enthält sie nur einen Eintrag, der z.B. so aussehen kann:
gain_x double

Der Prozess-Sourcecode 25 ist der Sourcecode für den Prozess 3. Er enthält die Routinen, um den Steuer- bzw. Regelprozess auf dem Target-System 2 auszuführen. Beispielsweise kann es sich um einen Sourcecode in C handeln. Der Prozess-Sourcecode enthält auch Accessor-Routinen, die es erlauben, die Parameter des Prozesses zu lesen bzw. zu verändern.

Die Access-Interface-Datei 26 enthält eine Deklaration der Accessor-Routinen, z.B. als Header File für die Programmiersprache C. Im obigen Beispiel könnte er z.B. folgende zwei Routinen definieren:

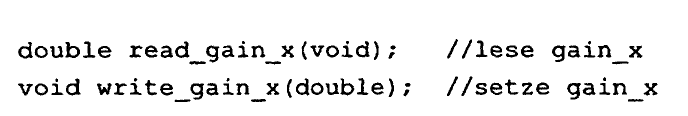

(In einer konkreten Ausführung sollten zusätzlich Fehlersituationen geprüft und entsprechende Fehlermeldungen ausgetauscht werden. So könnten die Funktion write_gain_x() z.B. eine Fehlermeldung zurückgeben, falls der gewünschte Parameterwert ausserhalb gewisser Grenzwerte liegt.)

Das Entwicklungssystem enthält weiter einen HTML- und/oder XML-Generator 27, der es erlaubt, die im Design-Modul 21 erzeugte Darstellung der Steuerung bzw. Regelung in ein HTML- und/oder XML-Format umzuwandeln und eine entsprechende Beschreibungsdatei 28 zu erzeugen, wobei hierunter auch ein Gruppe mehrerer verknüpfter Dokumente zu verstehen ist. Die Beschreibungsdatei 28 enthält z.B. als Link ein Diagramm der Steuerung bzw. Regelung sowie eine Liste der Parameter. Sie sieht, auszugsweise, z.B. so aus:

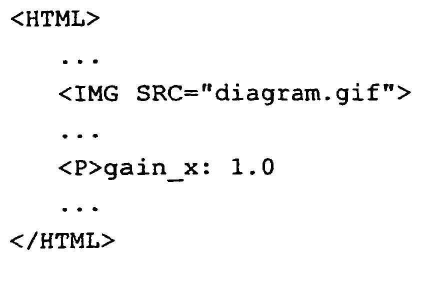

Die soweit beschriebenen Komponenten des Entwicklungssystems 20 können z.B. konventionelle Programmprodukte sein. So kann insbesondere das eingangs genannte Matlab der Firma The MathWorks, Inc. verwendet werden. Dabei kann die Simulation in Matlab selbst durchgeführt werden. Als Design-Modul könnte Simulink® oder Stateflow® eingesetzt werden. Als Code-Generator 23 wäre "RealTime Workshop" bzw. "Stateflow Coder" zu verwenden, als HTMLund/oder XML-Generator "MATLAB Report Generator" und "Simulink", alle von der Firma The MathWorks, Inc.

Die Beschreibungsdatei 28 und die Parameterlisten-Datei 24 werden einem Tag-Generator 37 zugeführt. Der Tag-Generator 37 ist ein Computerprogramm oder Programm-Modul, und er führt in die Beschreibungsdatei 28 HTML-Tags ein, welche die Parameter kennzeichnen, so dass der Webserver 5 später die entsprechenden Ein- bzw. Ausgabeelemente in das Prozesssteuerungs-Dokument einfügen kann. Beispielsweise kann die Beschreibungsdatei folgendermassen umgewandelt werden.

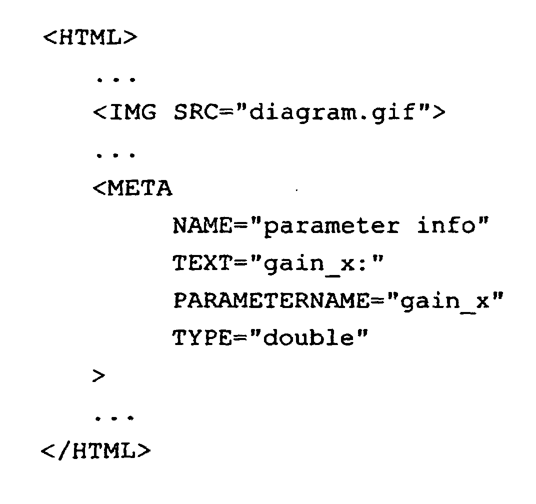

Der Meta-Tag ersetzt in der hier gezeigten Variante also die Zeile "<P>gain_x: 1.0" und definiert, dass an der entsprechenden Position der Text "gain_x:", das Eingabefeld 9 und der entsprechende Knopf 10 anzuordnen sind.

Nun wird die mit den Tags ergänzte Beschreibungsdatei 29 einem Webserver-Generator 30 zugeführt. Dieser erzeugt den Webserver-Sourcecode 31 und die Daten für den Webserver 5. Zudem erzeugt er eine Stub-Datei 32, die für jeden Parameter leere Routinen ("stubs") enthält. Diese Routinen werden später vom Webserver 5 aufgerufen, um die jeweiligen Parameter zu lesen und zu schreiben. Im obigen Beispiel kann die Stub-Datei 32 z.B. die folgenden Routinen definieren:

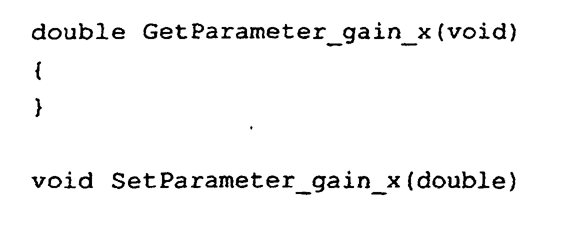

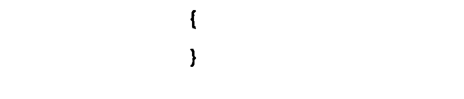

Zum Erzeugen des Webserver-Sourcecodes und der Stub-Datei 32 wird vorzugsweise ein konventionelles Produkt verwendet, beispielsweise EmWeb™ der Firma Agranat Systems, Inc., Maynard, USA.

In einem nächsten Schritt wird die Stub-Datei 32 und die Access-Interface-Datei 26 einem Stubfiller 33 zugeführt. Der Stubfiller 33 kann z.B. als eingenständiges Programm bzw. Programmodul ausgestaltet sein. Er setzt in jede Routine der Stub-Datei 32 die entsprechende Routine der Access-Interface-Datei 26 ein und erzeugt eine Glue-Datei mit Glue-Sourcecode 34. Im vorliegenden Beispiel könnte diese z.B. vereinfacht so aussehen: 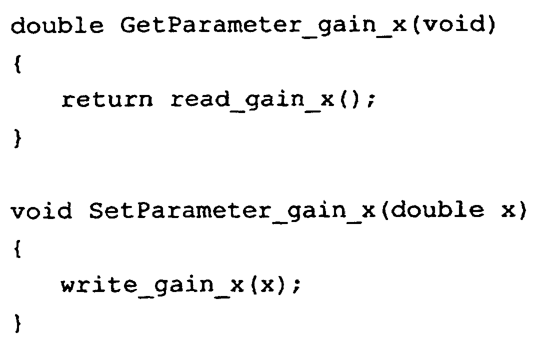 (Auch hier ist vorzugsweise noch Fehlerbehandlungs-Code hinzuzufügen.)

Nun können der Webserver-Sourcecode 31, der Glue-Sourcecode 34, die Access-Interface-Datei 26 und der Prozess-Sourcecode 25 in einem Compiler/Linker 35 kompiliert und gelinkt werden, um eine Codedatei 36 mit dem auf dem Target-System 2 lauffähigen Code für den Prozess 3 und den Webserver 5 zu erzeugen. Dieser Code kann auf das Target-System 2 transferiert werden.

Einmal auf dem Target-System 2 installiert, stellt der Webserver 5 auf Aufforderung dem Client-Computer 7 das Prozesssteuerungs-Dokument 8 zur Verfügung. Im vorliegenden Beispiel könnte es z.B. wie folgt aussehen:

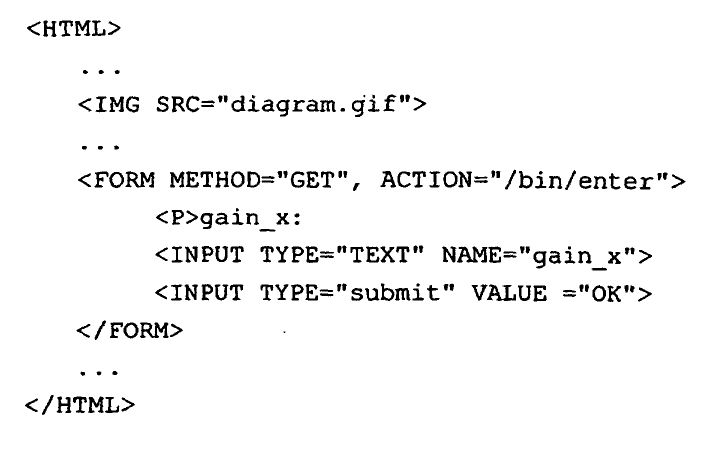

Im obigen Beispiel sind das Entwicklungssystem 20, der Tag-Generator 37, der Webserver-Generator 30 und der Stubfiller 33 separate Programme bzw. Programmgruppen. Diese Abgrenzung ist jedoch nicht notwendig. So kann z.B. der HTML- und/oder XML-Generator 27 so ausgestaltet werden, dass er die für den Webserver-Generator 30 notwendigen Tags direkt in die Beschreibungsdatei einsetzt, so dass der Tag-Generator 37 entfallen kann. Alternativ hierzu könnte die Rolle des Tag-Generators 37 auch vom Webserver-Generator 30 übernommen werden. Auch der Stubfiller 33 könnte in den Webserver-Generator 30 oder den Code-Generator 23 integriert werden

Im obigen Beispiel besitzt die Beschreibungsdatei vorzugsweise HTML-Format. Sie kann zusätzlich hierzu oder alternativ hierzu den XML-Formatierungsregeln folgen. In diesem Fall können anstelle der Tags auch andere, XML-Kompatible Datenstrukturen zur Steuerung des Webserver-Generators 30 in die Beschreibungsdatei eingefügt werden.

In den obigen Beispielen erscheinen die Parameter als Liste am Ende des Prozesssteuerungs-Dokuments 8. Es ist jedoch auch denkbar, ihre Werte direkt in das Diagramm einzusetzen, welches im oberen Teil des Dokuments erscheint. In diesem Falle ist der HTML- und/oder XML-Generator 27 so anzupassen, dass er den dazu nötigen Platz im Diagramm schafft, und es ist z.B. denkbar, dass der Webserver 5 ein Java-Applet erzeugt, dass Klickvorgänge auf die im Diagramm erscheinenden Parameter mit entsprechenden Eingabemasken beantwortet.

Die Tags in der Beschreibungsdatei 29 werden im obigen Beispiel vom Webserver-Generator 30 interpretiert. Es ist jedoch auch denkbar, dass sie erst später vom Webserver 5 ausgewertet und in entsprechende Eingabeund Ausgabeelemente umgesetzt werden.

In der Ausführung gemäss Fig. 2 werden die Code-Teile, wie z.B. der Prozess-Sourcecode, der Webserver-Sourcecode und der Glue-Sourcecode zuerst als Source-Code erzeugt und sodann kompiliert und gelinkt. Es ist jedoch denkbar, dass mindestens teilweise direkt lauffähiger Code erzeugt wird, der sodann nur noch gelinkt werden muss.

### Bezugszeichenliste

- 1:: Steuerung
- 2:: Target-System
- 3:: Regel- bzw. Steuerprozess bzw. Prozesscode
- 4:: Ein- und Ausgänge der Regelung bzw. Steuerung 1
- 5:: Webserver
- 6:: TCP/IP-Schnittstelle
- 7:: Client-Computer
- 8:: Prozesssteuerungs-Dokument
- 9:: Eingabefeld
- 10:: Knopf
- 11:: Entwicklungs-Computer
- 20:: Entwicklungssystem
- 21:: Design-Modul
- 22:: Simulations-Modul
- 23:: Code-Generator
- 24:: Parameterlisten-Datei
- 25:: Prozess-Sourcecode
- 26:: Access-Interface-Datei
- 27:: HTML- und/oder XML-Generator
- 28:: Beschreibungsdatei
- 29:: Beschreibungsdatei mit Tags
- 30:: Webserver-Generator
- 31:: Webserver-Sourcecode
- 32:: Stub-Datei
- 33:: Stub-Filler
- 34:: Glue-Sourcecode
- 35:: Compiler/Linker
- 36:: Codedatei
- 37:: Tag-Generator

## Patentansprüche

1. Verfahren zum Herstellen einer Regelung bzw. Steuerung (1), welche einen durch einen oder mehrere Parameter kontrollierten, auf einem Target-System (2) der Regelung (1) laufenden Regel- bzw. Steuerprozess (3) aufweist, wobei der Regel- bzw. Steuerprozess (3) auf einem Entwicklungssystem (20) simuliert wird und mit dem Entwicklungssystem (20) zum Ausführen auf dem Target-System (2) bestimmter Prozess-Code (3) erzeugt wird, und wobei das Verfahren **gekennzeichnet ist durch** die folgenden Schritte:
Erzeugen einer Beschreibungs-Datei (28, 29) aus dem Entwicklungssystem (20), wobei die Beschreibungs-Datei (28, 29) zumindest die Parameter beschreibt,
Erzeugen eines Webservers (5) oder von Daten für einen Webserver (5) aus der Beschreibungs-Datei (28, 29) oder aus Daten, die von der Beschreibungs-Datei (28, 29) abgeleitet wurden, wobei der Webserver (5) auf dem Target-System (2) lauffähig ist und ausgestaltet ist, auf die Parameter des auf dem Target-System (2) laufenden Prozess-Codes (3) zuzugreifen und ein Prozesssteuerungs-Dokument (8) in HTML- und/oder XML-Format zu erzeugen, welches Ein- und/oder Ausgabeelemente für die Parameter enthält.

2. Verfahren nach Anspruch 1, **dadurch gekennzeichnet, dass** die Beschreibungs-Datei (28, 29) Angaben zur Anordnung der Parameter im Prozesssteuerungs-Dokument (8) macht.

3. Verfahren nach Anspruch 2, **dadurch gekennzeichnet, dass** die Beschreibungsdatei (28, 29) in HTMLund/oder XML-Format ist.

4. Verfahren nach einem der Ansprüche 2 oder 3, **gekennzeichnet durch** die folgenden Schritte
Erzeugen einer Parameterlisten-Datei (24) mit dem Entwicklungssystem (20), wobei die Parameterlisten-Datei (24) für jeden Parameter zumindest einen in der Beschreibungs-Datei (28, 29) verwendeten Namen enthält,
Erzeugen von Steuerdaten in die Beschreibungs-Datei (28, 29) unter Verwendung der Parameterlisten-Datei (24), wobei die Steuerdaten die in der Beschreibungs-Datei (28, 29) erscheinenden Parameter kennzeichnen, und insbesondere wobei die Steuerdaten HTMLund/oder XML-Tags sind.

5. Verfahren nach einem der vorangehenden Ansprüche, **dadurch gekennzeichnet,**
**dass** mit dem Entwicklungssystem (20) mindestens eine Access-Interface-Datei (26) mit Deklarationen für Routinen zum Zugriff auf die Parameter des laufenden Prozess-Codes (3) erzeugt wird und
**dass** die Access-Interface-Datei (26) bei der Erzeugung des Webservers (5) für die Erzeugung von Code zum Zugriff auf die Parameter benutzt wird.

6. Verfahren nach Anspruch 5, **dadurch gekennzeichnet, dass** mit einem Webserver-Generator (30) Webserver-Sourcecode (31, 34) für mindestens einen Teil des Webservers (5) erzeugt wird, und insbesondere dass der Webserver-Sourcecode (31, 34) zusammen mit der Access-Interface-Datei (26) kompiliert wird.

7. Verfahren nach Anspruch 6, **dadurch gekennzeichnet, dass** mit dem Webserver-Generator (30) mindestens eine Stub-Datei (32) mit leeren Routinen für den Zugriff auf die Parameter erzeugt wird und dass in einem Stubfiller (33) die in der Access-Interface-Datei (26) definierten Routinen in die in der Stub-Datei implementierten Routinen eingefügt werden, um einen Glue-Sourcecode (34) zu erzeugen.

8. Verfahren nach Anspruch 7, **dadurch gekennzeichnet, dass** für mindestens einen Teil des Prozess-Codes (3) Prozess-Sourcecode (25) erzeugt wird, wobei die Access-Interface-Datei (26) im Prozess-Sourcecode (25) implementierte Routinen beschreibt, und dass der Prozess-Sourcecode (25), der Webserver-Sourcecode (31), der Glue-Sourcecode (34) und die Access-Interface-Datei (26) kompiliert und miteinander gelinkt werden.

9. Computerprogrammprodukt mit Programmcode-Mitteln, die auf mindestens einem computerlesbaren Medium gespeichert oder auf einen Träger aufmoduliert sind, um das Verfahren nach einem der vorangehenden Ansprüche auszuführen, wenn das Computerprogramm auf mindestens einem Computer ausgeführt wird.

## Claims

1. A method for producing a regulator or controller (1) having a regulation or control process (3) which is controlled by one or more parameters and runs on a target system (2) for the regulator (1), where the regulation or control process (3) is simulated on a development system (20) and the development system (20) is used to produce process code (3) intended for execution on the target system (2), and where the method is **characterized by** the following steps:
A description file (28, 29) is produced from the development system (20), the description file (28, 29) describing at least the parameters,
a web server (5) or data for a web server (5) is produced from the description file (28, 29) or from data which have been derived from the description file (28, 29), the web server (5) being capable of running on the target system (2) and being designed to access the parameters of the process code (3) running on the target system (2) and to produce a process control document (8) in HTML and/or XML format which contains input and/or output elements for the parameters.

2. The method as claimed in claim 1, **characterized in that** the description file (28, 29) comprises statements for arranging the parameters in the process control document (8).

3. The method as claimed in claim 2, **characterized in that** the description file (28, 29) is in HTML and/or XML format.

4. The method as claimed in one of claims 2 or 3, **characterized by** the following steps:
A parameter list file (24) is produced using the development system (20), the parameter list file (24) containing at least one name used in the description file (28, 29) for each parameter, control data are produced in the description file (28, 29) using the parameter list file (24), the control data characterizing the parameters appearing in the description file (28, 29), and, in particular, the control data being HTML and/or XML tags.

5. The method as claimed in one of the preceding claims, **characterized**
**in that** the development system (20) is used to produce at least one access interface file (26) having declarations for routines for accessing the parameters of the running process code (3), and
**in that** the access interface file (26) is used when the web server (5) is produced in order to produce code for accessing the parameters.

6. The method as claimed in claim 5, **characterized in that** a web server generator (30) is used to produce web server source code (31, 34) for at least part of the web server (5), and, in particular, **in that** the web server source code (31, 34) is compiled together with the access interface file (26).

7. The method as claimed in claim 6, **characterized in that** the web server generator (30) is used to produce at least one stub file (32) having empty routines for accessing the parameters, and **in that** a stub filler (33) inserts the routines defined in the access interface file (26) into the routines implemented in the stub file in order to produce a glue source code (34).

8. The method as claimed in claim 7, **characterized in that** process source code (25) is produced for at least part of the process code (3), the access interface file (6) describing routines implemented in the process source code (25), and **in that** the process source code (25), the web server source code (31), the glue source code (34) and the access interface file (26) are compiled and are linked to one another.

9. A computer program product having program code means which are stored on at least one computer-readable medium or are modulated onto a carrier in order to carry out the method as claimed in one of the preceding claims when the computer program is executed on at least one computer.

## Revendications

1. Procédé pour la fabrication d'un réglage ou d'une commande (1), qui présente un processus de réglage ou de commande (3) contrôlé par un ou plusieurs paramètres et fonctionnant sur un système cible (2) du réglage (1), le processus de réglage ou de commande (3) étant simulé sur un système de développement (20) et étant généré avec le système de développement (20) pour l'exécution sur le système cible (2) de codes de processus (3) définis, et le procédé étant **caractérisé par** les étapes suivantes :
génération d'un fichier de description (28, 29) à partir du système de développement (20), le fichier de description (28, 29) décrivant au moins les paramètres,
génération d'un serveur web (5) ou de fichiers pour un serveur web (5) à partir du fichier de description (28, 29) ou à partir de données qui ont été déduites du fichier de description (28, 29), le serveur web (5) pouvant fonctionner sur le système cible (2) et étant conçu pour recourir aux paramètres du code de processus (3) fonctionnant sur le système cible (2) et générer un document de commande de processus (8) dans le format HTML et/ou le format XML, qui contient des éléments d'entrée et/ou de sortie pour les paramètres.

2. Procédé selon la revendication 1, **caractérisé en ce que** le fichier de description (28, 29) donne des informations concernant la disposition des paramètres dans le document de commande de processus (8).

3. Procédé selon la revendication 2, **caractérisé en ce que** le fichier de description (28, 29) est dans le format HTML et/ou le format XML.

4. Procédé selon l'une quelconque des revendications 2 ou 3, **caractérisé par** les étapes suivantes :
génération d'un fichier de liste de paramètres (24) avec le système de développement (20), le fichier de listes de paramètres (24) contenant pour chaque paramètre au moins un nom utilisé dans le fichier de description (28, 29),
génération de données de commande dans le fichier de description (28, 29) avec l'utilisation du fichier de listes de paramètres (24), les données de commande caractérisant les paramètres apparaissant dans le fichier de description (28, 29), et en particulier les données de commande étant des balises HTML et/ou des balises XML.

5. Procédé selon l'une quelconque des revendications précédentes, **caractérisé en ce que**
avec le système de développement (20), on génère au moins un fichier d'interface d'accès (26) avec des déclarations pour des routines pour l'accès aux paramètres du code de processus (3) en cours et
**en ce que** le fichier d'interface d'accès (26) est utilisé lors de la génération du serveur web (5) pour la génération de code pour l'accès aux paramètres.

6. Procédé selon la revendication 5, **caractérisé en ce que**, avec un générateur de serveur web (30), un code source du serveur web (31, 34) est généré pour au moins une partie du serveur web (5), et en particulier **en ce que** le code source du serveur web (31, 34) est compilé en même temps que le fichier d'interface d'accès (26).

7. Procédé selon la revendication 6, **caractérisé en ce que**, avec le générateur du serveur web (30), au moins un fichier stub (32) est généré avec des routines vides pour l'accès aux paramètres et **en ce que**, dans un stubfiller (33), les routines définies dans le fichier d'intervalle d'accès (26) sont insérées dans les routines mises en place dans le fichier stub, afin de générer un code source de Glue (34).

8. Procédé selon la revendication 7, **caractérisé en ce que** le code source de processus (25) est généré pour au moins une partie du code de processus (3), le fichier d'interface d'accès (26) décrivant des routines mises en place dans le code source de processus (25) et **en ce que** le code source de processus (25), le code source du serveur web (31), le code source de Glue (34) et le fichier d'interface d'accès (26) sont compilés et reliés entre eux.

9. Produit de programme informatique avec des moyens de code de programme, qui sont modulés sur au moins un support pouvant être lu par ordinateur ou sont modulés sur un support, afin d'exécuter le procédé selon l'une quelconque des revendications précédentes lorsque le programme informatique est exécuté sur au moins un ordinateur.
